(19)

Europäisches
Patentamt

European
Patent Office

Office européen
des brevets

(11) **EP 4 373 009 A2**

(12) **EUROPEAN PATENT APPLICATION**
published in accordance with Art. 153(4) EPC

(43) Date of publication:
**22.05.2024 Bulletin 2024/21**

(21) Application number: **22842488.3**

(22) Date of filing: **14.07.2022**

(51) International Patent Classification (IPC):
*H04B 7/06* (2006.01)    *H04B 7/0417* (2017.01)
*H04B 7/024* (2017.01)    *H04B 17/318* (2015.01)
*H04W 24/10* (2009.01)    *H04L 5/00* (2006.01)

(52) Cooperative Patent Classification (CPC):
**H04B 7/024; H04B 7/0417; H04B 7/06;
H04B 17/318; H04L 5/00; H04W 24/10**

(86) International application number:
**PCT/KR2022/010293**

(87) International publication number:
**WO 2023/287226 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2021   KR 20210093047**

(71) Applicant: **LG Electronics Inc.**
**Yeongdeungpo-gu**
**Seoul 07336 (KR)**

(72) Inventors:
• **GO, Seongwon**
**Seoul 06772 (KR)**
• **KIM, Hyungtae**
**Seoul 06772 (KR)**
• **KANG, Jiwon**
**Seoul 06772 (KR)**
• **PARK, Haewook**
**Seoul 06772 (KR)**

(74) Representative: **Plasseraud IP**
**66, rue de la Chaussée d'Antin**
**75440 Paris Cedex 09 (FR)**

(54) **METHOD AND DEVICE FOR TRANSMITTING OR RECEIVING CHANNEL STATE INFORMATION IN WIRELESS COMMUNICATION SYSTEM**

(57)    Disclosed are a method and a device for transmitting or receiving channel state information in a wireless communication system. A method by which a terminal transmits channel state information (CSI), according to one embodiment of the present disclosure, may comprise the steps of: receiving, from a base station, first configuration information related to a CSI report and second configuration information related to a CSI resource; receiving, from the base station, a CSI-reference signal (CSI-RS) on a plurality of CSI resources of M CSI resource sets on the basis of the second configuration information; and transmitting the CSI report to the base station on the basis of the CSI-RS and the first configuration information.

FIG.14

**Description**

[Technical Field]

The present disclosure relates to a wireless communication system, and in more detail, relates to a method and an apparatus of transmitting and receiving channel state information (CSI) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving CSI.

In addition, an additional technical object of the present disclosure is to provide a method and an apparatus of transmitting and receiving CSI for TRP-specific beam management in transmitting and receiving multiple transmission reception points (TRPs).

The technical objects to be achieved by the present disclosure are not limited to the above-described technical objects, and other technical objects which are not described herein will be clearly understood by those skilled in the pertinent art from the following description.

[Technical Solution]

A method of transmitting channel state information, CSI) by a user equipment (UE) in a wireless communication system according to an aspect of the present disclosure may comprise: receiving, from a base station, first configuration information related to a CSI report and second configuration information related to a CSI resource, wherein based on group-based report being configured by the first configuration information, the second configuration information includes information on M (M is a natural number) CSI resource sets associated with the first configuration information; receiving, from the base station, a CSI-reference signal (CSI-RS) on a plurality of CSI resources of the M CSI resource sets based on the second configuration information; and transmitting, to the base station, the CSI report based on the CSI-RS and the first configuration information. Herein, based on a report for N (N is a natural number) CSI resource groups being configured by the first configuration information, each of the N CSI resource groups may be configured with M CSI resources including one CSI resource from each of the M CSI resource sets, and the M CSI resources for each of the N resource groups may be simultaneously received by the UE. The CSI report may include phase-related information for each of the N resource groups.

A method of receiving channel state information (CSI) by a base station in a wireless communication system according to an additional aspect of the present disclosure may comprise: transmitting, to a user equipment (UE), first configuration information related to a CSI report and second configuration information related to a CSI resource, wherein based on group-based report being configured by the first configuration information, the second configuration information includes information on M (M is a natural number) CSI resource sets associated with the first configuration information; transmitting, to the UE, a CSI-reference signal (CSI-RS) on a plurality of CSI resources of the M CSI resource sets based on the second configuration information; and receiving, from the UEs, the CSI report based on the CSI-RS and the first configuration information. Herein, based on a report for N (N is a natural number) CSI resource groups being configured by the first configuration information, each of the N CSI resource groups may be configured with M CSI resources including one CSI resource from each of the M CSI resource sets, and the M CSI resources for each of the N resource groups may be simultaneously received by the UE. The CSI report may include phase-related information for each of the N resource groups.

[Technical Effects]

According to an embodiment of the present disclosure, when transmitting and receiving multiple transmission reception points (TRPs), channel state information for TRP-specific beam management can be smoothly transmitted and received.

In addition, according to an embodiment of the present disclosure, in transmitting and receiving channel state information for TRP-specific beam management, an operation of measurement, calculation, and reporting of channel state information considering Coherent-Joint Transmission (C-JT) may be performed efficiently.

Effects achievable by the present disclosure are not limited to the above-described effects, and other effects which are not described herein may be clearly understood by those skilled in the pertinent art from the following description.

[ Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram which illustrates a downlink beam management operation in a wireless communication system to which the present disclosure may be applied.

FIG. 8 is a diagram which illustrates a downlink beam management procedure using an SSB in a wireless communication system to which the present disclosure may be applied.

FIG. 9 is a diagram which illustrates a downlink beam management operation using a CSI-RS in a wireless communication system to which the present disclosure may be applied.

FIG. 10 is a diagram which illustrates an Rx beam determination process of a terminal in a wireless communication system to which the present disclosure may be applied.

FIG. 11 is a diagram which illustrates a Tx beam determination process of a base station in a wireless communication system to which the present disclosure may be applied.

FIG. 12 is a diagram which illustrates resource allocation in a time and frequency domain related to a downlink beam management operation in a wireless communication system to which the present disclosure may be applied.

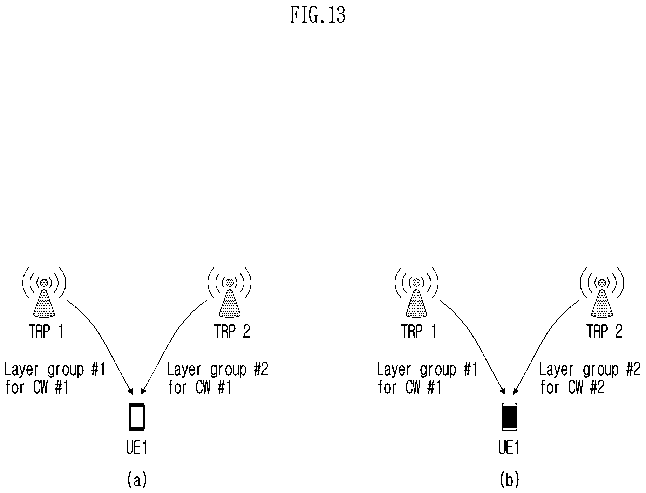

FIG. 13 is a diagram illustrating multi panel terminals in a wireless communication system to which the present disclosure may be applied.

FIG. 14 is a diagram illustrating a signaling procedure between a base station and a UE for a method of transmitting and receiving control information according to an embodiment of the present disclosure.

FIG. 15 is a diagram illustrating the operation of a UE for a method for transmitting and receiving channel state information according to an embodiment of the present disclosure.

FIG. 16 is a diagram illustrating the operation of a base station for a method for transmitting and receiving channel state information according to an embodiment of the present disclosure.

FIG. 17 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211 (physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz).

Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

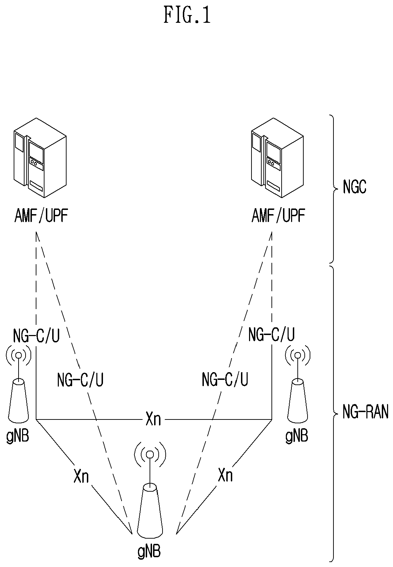

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

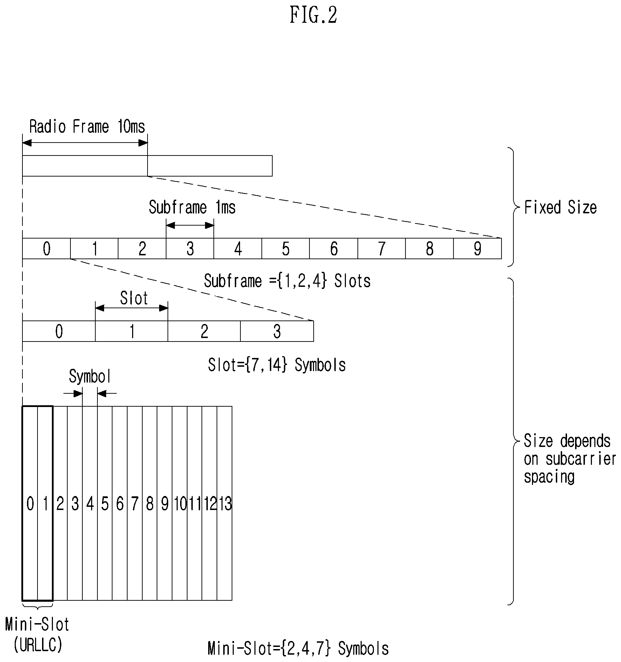

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - | 60, 120, |
|  | 52600MHz | 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe.

All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame, \mu}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame, \mu}$ | $N_{slot}^{subframe, \mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

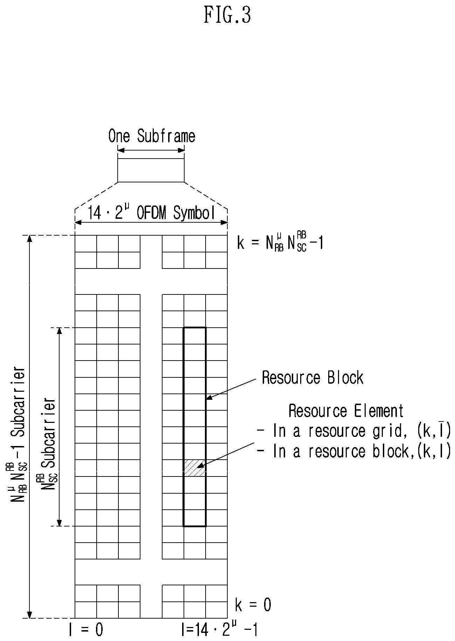

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}\leq N_{RB}^{max,\mu}$. The $N_{RB}^{max, \mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,...,$N_{RB}^{\mu}N_{sc}^{RB}$-1 is an index in a frequency domain and l'=0,...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2 .
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

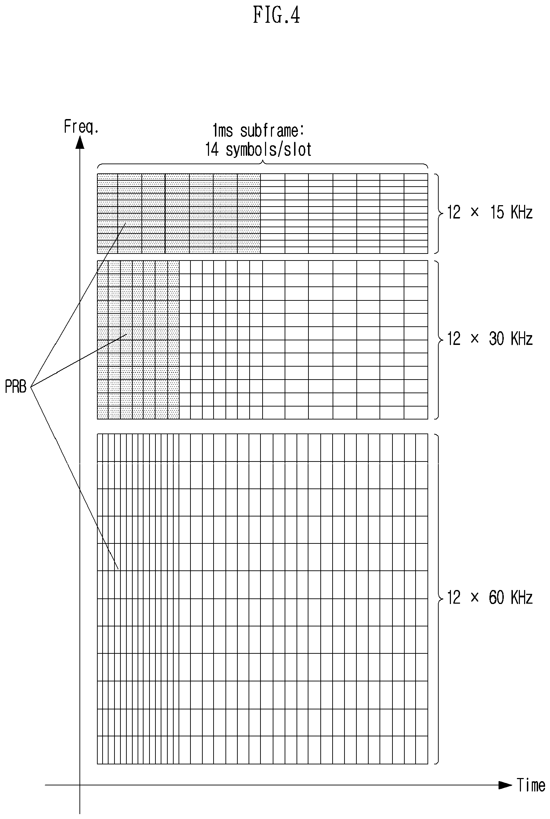

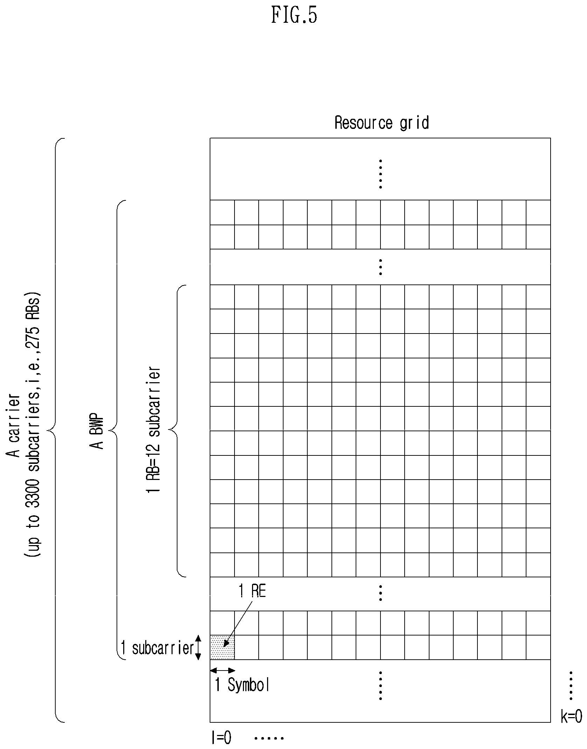

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.) . In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

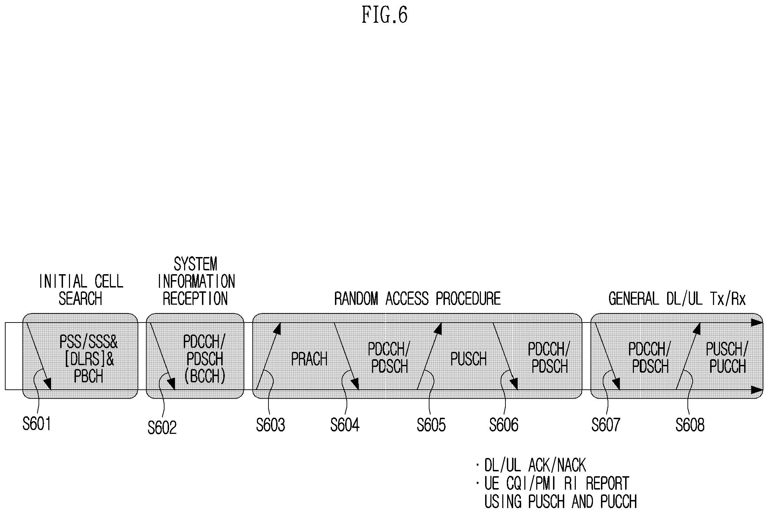

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Beam Management (BM)

As a BM procedure is L1(layer 1)/L2(layer 2) procedures for acquiring and maintaining a set of base station (e.g., gNB, TRP, etc.) and/or terminal (e.g., UE) beams which may be used to transmit/receive a downlink (DL) and an uplink (UL), it may include the following procedures and terms.

- Beam measurement: An operation that a base station or UE measures a property of a received beamforming signal
- Beam determination: An operation that a base station or UE selects its Tx beam / Rx beam
- Beam sweeping: An operation of covering a spatial domain by using a Tx and/or Rx beam during a certain time interval in a predetermined manner
- Beam report: An operation that UE reports information of a beamformed signal based on beam measurement

The BM procedure can be divided into (1) a DL BM procedure using a synchronization signal (SS)/physical broadcast channel (PBCH) block or CSI-RS, and (2) a UL BM procedure using a sounding reference signal (SRS).

In addition, each BM procedure may include Tx beam sweeping for determining a Tx Beam and Rx beam sweeping for determining a Rx beam.

Hereinafter, a DL BM procedure is described.

A DL BM procedure may include (1) transmission for beamformed DL RSs (reference signal) of a base station (e.g., a CSI-RS or a SS Block (SSB)) and (2) beam reporting of a terminal.

Here, beam reporting may include preferred DL RS ID (identifier)(s) and L1-RSRP (Reference Signal Received Power) corresponding to it.

The DL RS ID may be an SSBRI (SSB Resource Indicator) or a CRI (CSI-RS Resource Indicator).

Hereinafter, a DL BM procedure using an SSB is described.

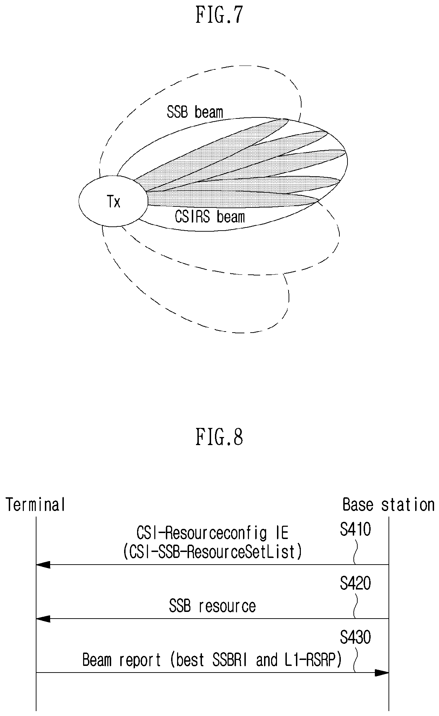

FIG. 7 is a diagram which illustrates a downlink beam management operation in a wireless communication system to which the present disclosure may be applied.

In reference to FIG. 7, an SSB beam and a CSI-RS beam may be used for beam measurement. A measurement metric is L1-RSRP per resource/block. An SSB may be used for coarse beam measurement and a CSI-RS may be used for fine beam measurement. An SSB may be used for both Tx beam sweeping and Rx beam sweeping.

Rx beam sweeping using an SSB may be performed while UE changes an Rx beam for the same SSBRI across multiple SSB bursts. Here, one SS burst includes one or more SSBs and one SS burst set includes one or more SSB bursts.

FIG. 8 is a diagram which illustrates a downlink beam management procedure using an SSB in a wireless communication system to which the present disclosure may be applied.

A configuration on beam report using an SSB is performed in a CSI/beam configuration in a RRC connected state (or a RRC connected mode).

In reference to FIG. 8, a terminal receives CSI-ResourceConfig IE including CSI-SSB-ResourceSetList including SSB resources used for BM from a base station S410.

Table 6 represents an example of CSI-ResourceConfig IE and as in Table 6, a BM configuration using an SSB configures an SSB like a CSI-RS resource without being separately defined.

【Table 6】

```
-- ASN1START
-- TAG-CSI-RESOURCECONFIG-START

CSI-ResourceConfig ::=                  SEQUENCE {
     csi-ResourceConfigId                 CSI-ResourceConfigId,
     csi-RS-ResourceSetList               CHOICE {
        nzp-CSI-RS-SSB                       SEQUENCE {
                nzp-CSI-RS-ResourceSetList          SEQUENCE
(SIZE (1..maxNrofNZP-CSI-RS-ResourceSetsPerConfig)) OF NZP-CSI-RS-
ResourceSetId OPTIONAL,
                csi-SSB-ResourceSetList             SEQUENCE
(SIZE   (1..maxNrofCSI-SSB-ResourceSetsPerConfig))   OF   CSI-SSB-
ResourceSetId   OPTIONAL
        },
           csi-IM-ResourceSetList             SEQUENCE          (SIZE
(1..maxNrofCSI-IM-ResourceSetsPerConfig)) OF CSI-IM-ResourceSetId
     },

     bwp-Id                             BWP-Id,
     resourceType                       ENUMERATED  {  aperiodic,
semiPersistent, periodic },
        ...
}

-- TAG-CSI-RESOURCECONFIGTOADDMOD-STOP
-- ASN1STOP
```

In Table 6, a csi-SSB-ResourceSetList parameter represents a list of SSB resources used for beam management and reporting in one resource set. Here, an SSB resource set may be configured as {SSBx1, SSBx2, SSBx3, SSBx4, ...}. An SSB index may be defined as 0 to 63.

A terminal receives an SSB resource from the base station based on the CSI-SSB-ResourceSetList S420.

When CSI-RS reportConfig related to report on SSBRI and L1-RSRP is configured, the terminal (beam) reports the best SSBRI and L1-RSRP corresponding to it to a base station S430.

Hereinafter, a DL BM procedure using a CSI-RS is described.

When usage of a CSI-RS is described, a CSI-RS is used for beam management i) when a repetition parameter is configured for a specific CSI-RS resource set and TRS_info is not configured. ii) When a repetition parameter is not configured and TRS_info is configured, a CSI-RS is used for a TRS (tracking reference signal). iii) When a repetition parameter is not configured and TRS_info is not configured, a CSI-RS is used for CSI acquisition.

Such a repetition parameter may be configured only for CSI-RS resource sets connected with CSI-ReportConfig having report of 'No Report (or None)' or L1 RSRP.

If a terminal is configured with CSI-ReportConfig that reportQuantity is configured as 'cri-RSRP' or 'none' and CSI-ResourceConfig (a higher layer parameter resourcesForChannelMeasurement) for channel measurement includes NZP-CSI-RS-ResourceSet that a higher layer parameter 'repetition' is configured without including a higher layer parameter 'trs-Info', the terminal may be configured only with ports with the same number (1-port or 2-port) having a higher layer parameter 'nrofPorts' for all CSI-RS resources in NZP-CSI-RS-ResourceSet.

When (a higher layer parameter) repetition is configured as 'ON', it is related to a Rx beam sweeping procedure of a terminal. In this case, when a terminal is configured with NZP-CSI-RS-ResourceSet, the terminal may assume that at least one CSI-RS resource in NZP-CSI-RS-ResourceSet is transmitted to the same downlink spatial domain transmission filter. In other words, at least one CSI-RS resource in NZP-CSI-RS-ResourceSet is transmitted through the same Tx beam. Here, at least one CSI-RS resource in NZP-CSI-RS-ResourceSet may be transmitted to a different OFDM symbol. In addition, a terminal does not expect to receive a different periodicity for periodicityAndOffset in all CSI-RS resources within NZP-CSI-RS-Resourceset.

On the other hand, when repetition is configured as 'OFF', it is related to a Tx beam sweeping procedure of a base station. In this case, when repetition is configured as 'OFF', a terminal does not assume that at least one CSI-RS resource in NZP-CSI-RS-ResourceSet is transmitted to the same downlink spatial domain transmission filter. In other words, at least one CSI-RS resource in NZP-CSI-RS-ResourceSet is transmitted through a different Tx beam.

In other words, when reportQuantity of the CSI-RS reportConfig IE is configured as 'ssb-Index-RSRP', a terminal reports the best SSBRI and L1-RSRP corresponding to it to a base station.

And, when a CSI-RS resource is configured in the same OFDM symbol(s) as an SSB (an SS/PBCH Block) and 'QCL-TypeD' may be applied, the terminal may assume that a CSI-RS and an SSB are quasi co-located from a viewpoint of 'QCL-TypeD'.

Here, the QCL TypeD may mean that antenna ports are QCL-ed from a viewpoint of a spatial Rx parameter. When a terminal receives a plurality of DL antenna ports in a QCL Type D relationship, the same Rx beam may be applied. In addition, a terminal does not expect that a CSI-RS will be configured in a RE overlapped with an RE of an SSB.

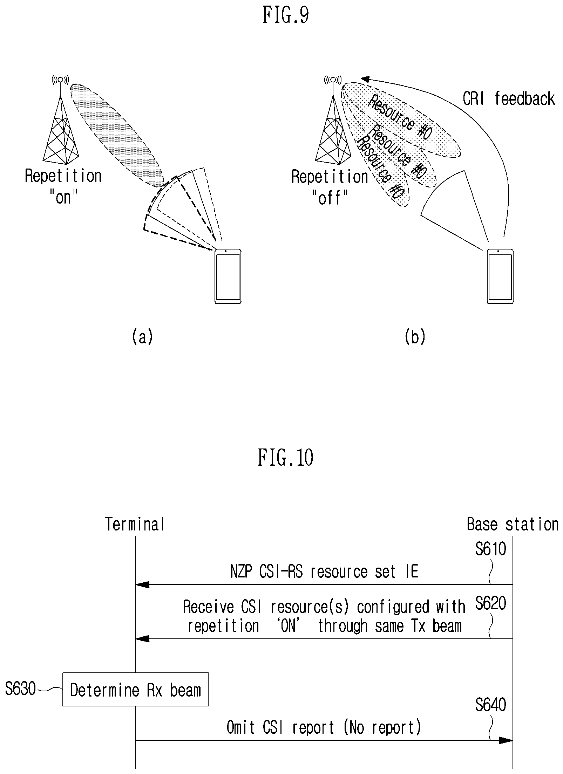

FIG. 9 is a diagram which illustrates a downlink beam management operation using a CSI-RS in a wireless communication system to which the present disclosure may be applied.

FIG. 9(a) represents a Rx beam determination (or refinement) procedure of a terminal and FIG. 9(b) represents a Tx beam sweeping procedure of a base station. In addition, FIG. 9(a) is a case in which a repetition parameter is configured as 'ON' and FIG. 9(b) is a case in which a repetition parameter is configured as 'OFF'.

FIG. 10 is a diagram which illustrates a Rx beam determination process of a terminal in a wireless communication system to which the present disclosure may be applied.

In reference to FIG. 9(a) and FIG. 10, a Rx beam determination process of a terminal is described.

A terminal receives a NZP CSI-RS resource set IE including a higher layer parameter repetition from a base station through RRC signaling S610. Here, the repetition parameter is configured as 'ON'.

A terminal repetitively receives resource(s) in a CSI-RS resource set configured as repetition 'ON' through the same Tx beam (or DL spatial domain transmission filter) of a base station in a different OFDM symbol S620.

A terminal determines its Rx beam S630.

A terminal omits CSI reporting S640. In this case, reportQuantity of a CSI reporting configuration may be configured as 'No report (or None).

In other words, the terminal may omit CSI reporting when it is configured as repetition 'ON'.

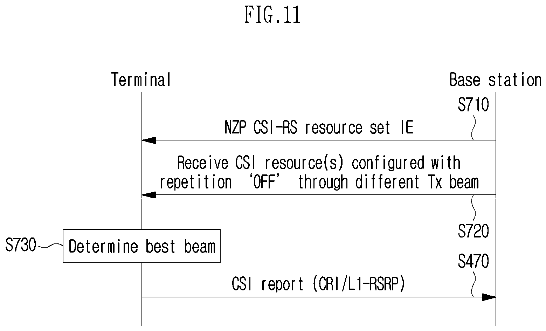

FIG. 11 is a diagram which illustrates a Tx beam determination process of a base station in a wireless communication system to which the present disclosure may be applied.

In reference to FIG. 9(b) and FIG. 11, a Tx beam determination process of a base station is described.

A terminal receives a NZP CSI-RS resource set IE including a higher layer parameter repetition from a base station through RRC signaling S710. Here, the repetition parameter is configured as 'OFF' and is related to a Tx beam sweeping procedure of a base station.

A terminal receives resource(s) in a CSI-RS resource set configured as repetition 'OFF' through a different Tx beam (DL spatial domain transmission filter) of a base station S720.

A terminal selects (or determines) the best beam S740.

A terminal reports an ID on a selected beam and relative quality information (e.g., L1-RSRP) to a base station S740. In this case, reportQuantity of a CSI reporting configuration may be configured as 'a CRI + L1-RSRP'.

In other words, when a CSI-RS is transmitted for BM, the terminal reports a CRI and L1-RSRP regarding it to a base station.

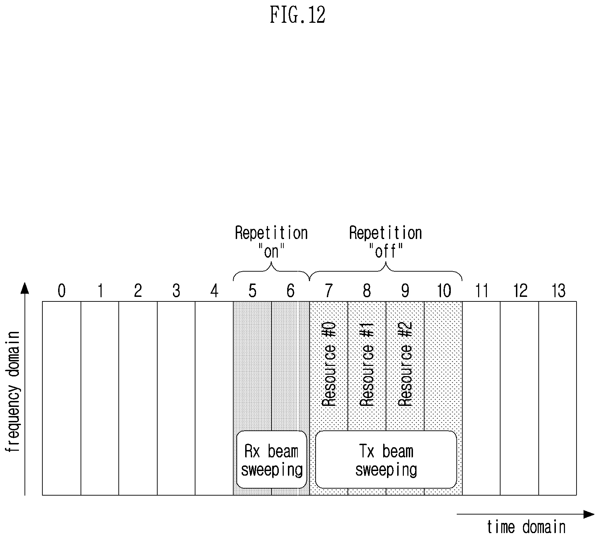

FIG. 12 is a diagram which illustrates resource allocation in a time and frequency domain related to a downlink beam management operation in a wireless communication system to which the present disclosure may be applied.

In reference to FIG. 12, it may be seen that when repetition 'ON' is configured in a CSI-RS resource set, a plurality of CSI-RS resources are repetitively used by applying the same Tx beam and when repetition 'OFF' is configured in a CSI-RS resource set, different CSI-RS resources are transmitted by a different Tx beam.

Hereinafter, a downlink BM related beam indication method is described.

A terminal may receive a RRC configuration for a list on up to M candidate transmission configuration indication (TCI) states at least for a purpose of a QCL (Quasi Co-location) indication. Here, M may be 64.

Each TCI state may be configured as one RS set. Each ID of a DL RS for a spatial QCL purpose (QCL Type D) at least in a RS set may refer to one of DL RS types such as an SSB, a P(periodic)-CSI RS, a SP(semi-persistent)-CSI RS, an a(aperiodic)-CSI RS, etc.

An ID of DL RS(s) in a RS set used at least for a spatial QCL purpose may be initialized/updated at least through explicit signaling.

Table 7 illustrates a TCI-State information element (IE) .

A TCI-State IE is associated with a quasi co-location (QCL) type corresponding to one or two DL reference signals (RS).

【Table 7】

```
-- ASN1START
-- TAG-TCI-STATE-START

TCI-State ::=                    SEQUENCE {
    tci-StateId                      TCI-StateId,
    qcl-Type1                        QCL-Info,
    qcl-Type2                        QCL-Info
                                         OPTIONAL,    -
- Need R
    ...
}

QCL-Info ::=                     SEQUENCE {
    cell                             ServCellIndex
                                         OPTIONAL,
    -- Need R
    bwp-Id                           BWP-Id
                                         OPTIONAL,
-- Cond CSI-RS-Indicated
    referenceSignal                  CHOICE {
        csi-rs                           NZP-CSI-RS-
ResourceId,
        ssb                              SSB-Index
    },
    qcl-Type                         ENUMERATED {typeA, typeB,
typeC, typeD},
    ...
}

-- TAG-TCI-STATE-STOP
-- ASN1STOP
```

In Table 7, a bwp-Id parameter represents a DL BWP (bandwidth part) where a RS is positioned, a cell parameter represents a carrier where a RS is positioned and a referencesignal parameter represents reference antenna port(s) which become a source of a quasi co-location for corresponding target antenna port(s) or a reference signal including it. The target antenna port(s) may be a CSI-RS, a PDCCH DMRS, or a PDSCH DMRS. In an example, a corresponding TCI state ID (identifier) may be indicated to NZP CSI-RS resource configuration information to indicate QCL reference RS information for a NZP (non-zero power) CSI-RS. In another example, a TCI state ID may be indicated to each CORESET configuration to indicate QCL reference information for PDCCH DMRS antenna port(s). In another example, a TCI state ID may be indicated through DCI to indicate QCL reference information for PDSCH DMRS antenna port(s).

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, multiple DCI based non-coherent joint transmission (NCJT)/single DCI based NCJT will be described.

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Multiple TRPs (MTRPs) performing NCJT transmission may transmit DL data to a terminal by using any one scheme of the following two schemes.

First, 'a single DCI based MTRP scheme is described. MTRPs cooperatively transmit one common PDSCH and each TRP participating in cooperative transmission spatially partitions and transmits a corresponding PDSCH into different layers (i.e., different DMRS ports) by using the same time frequency resource. Here, scheduling information on the PDSCH is indicated to UE through one DCI and which DMRS (group) port uses which QCL RS and QCL type information is indicated by the corresponding DCI (which is different from DCI indicating a QCL RS and a type which will be commonly applied to all DMRS ports indicated as in the existing scheme). In other words, M TCI states may be indicated through a TCI(Transmission Configuration Indicator) field in DCI (e.g., for 2 TRP cooperative transmission, M=2) and a QCL RS and a type may be indicated by using M different TCI states for M DMRS port group. In addition, DMRS port information may be indicated by using a new DMRS table.

Next, 'a multiple DCI based MTRP scheme' is described. Each of MTRPs transmits different DCI and PDSCH and (part or all of) the corresponding PDSCHs are overlapped each other and transmitted in a frequency time resource. Corresponding PDSCHs may be scrambled through a different scrambling ID (identifier) and the DCI may be transmitted through a CORESET belonging to a different CORESET group. (Here, a CORESET group may be identified by an index defined in a CORESET configuration of each CORESET. For example, when index = 0 is configured for CORESETs 1 and 2 and index = 1 is configured for CORESETs 3 and 4, CORESETs 1 and 2 are CORESET group 0 and CORESET 3 and 4 belong to a CORESET group 1. In addition, when an index is not defined in a CORESET, it may be construed as index=0) When a plurality of scrambling IDs are configured or two or more CORESET groups are configured in one serving cell, a UE may notice that it receives data according to a multiple DCI based MTRP operation.

Alternatively, whether of a single DCI based MTRP scheme or a multiple DCI based MTRP scheme may be indicated to UE through separate signaling. In an example, for one serving cell, a plurality of CRS (cell reference signal) patterns may be indicated to UE for a MTRP operation. In this case, PDSCH rate matching for a CRS may be different depending on a single DCI based MTRP scheme or a multiple DCI based MTRP scheme (because a CRS pattern is different).

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

FIG. 9 illustrates a method of multiple TRPs transmission in a wireless communication system to which the present disclosure may be applied.

In reference to FIG. 9(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 9(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 9(b), it may have a disadvantage that a code rate corresponding to a TB is higher compared to FIG. 9 (a). However, it has an advantage that it may adjust a code rate by indicating a different RV (redundancy version) value or may adjust a modulation order of each CW for encoded bits generated from the same TB according to a channel environment.

According to methods illustrated in FIG. 9(a) and FIG. 9(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following methods are discussed.

1) Method 1 (SDM): Time and frequency resource allocation is overlapped and n (n<=Ns) TCI states in a single slot

1-a) Method 1a

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule.

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

- The same TB having one DMRS port associated with multiple TCI state indexes is transmitted in one layer at one transmission time (occasion) or the same TB having multiple DMRS ports one-to-one associated with multiple TCI state indexes is transmitted in one layer.

In case of the above-described method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.
- The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at all transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- All transmission time (occasion) across K slots uses a common MCS with a single or multiple DMRS port(s).

A RV/TCI may be the same or different at a different transmission time (occasion).

Hereinafter, MTRP URLLC will be described.

In the present disclosure, DL MTRP URLLC means that multiple TRP transmit the same data (e.g., the same TB)/DCI using different layers/time/frequency resources. For example, TRP 1 transmits the same data/DCI in resource 1, and TRP 2 transmits the same data/DCI in resource 2. A UE configured for the DL MTRP-URLLC transmission method receives the same data/DCI using different layer/time/frequency resources. At this time, the UE is configured from the base station which QCL RS/type (i.e., DL TCI state) to use in the layer/time/frequency resource for receiving the same data/DCI. For example, when the same data/DCI is received in resource 1 and resource 2, a DL TCI state used in resource 1 and a DL TCI state used in resource 2 may be configured. Since the UE receives the same data/DCI through resource 1 and resource 2, high reliability can be achieved. This DL MTRP URLLC may be applied to PDSCH/PDCCH.

And, in the present disclosure, UL MTRP-URLLC means that multiple TRP receive the same data/uplink control information (UCI) from one UE by using different layer/time/frequency resources. For example, TRP 1 receives the same data/DCI from the UE in resource 1, and TRP 2 receives the same data/DCI from the UE in resource 2, and then the received data/DCI will be shared through a backhaul link connected between TRPs. The UE configured with the UL MTRP-URLLC transmission scheme transmits the same data/UCI using different layer/time/frequency resources. In this case, the UE is configured by the base station which Tx beam and which Tx power (i.e., UL TCI state) to use in the layer/time/frequency resource for transmitting the same data/UCI. For example, when the same data/UCI is transmitted in resource 1 and resource 2, a UL TCI state used in resource 1 and a UL TCI state used in resource 2 may be configured. This UL MTRP URLLC may be applied to PUSCH/PUCCH.

In addition, in the present disclosure, the meaning of using (or mapping) a specific TCI state (or TCI) when receiving data/DCI/UCI for a certain frequency/time/space resource (layer) is as follows. In the case of DL, it may mean that the channel is estimated from the DMRS by using the QCL type and QCL RS indicated by the TCI state in the frequency/time/spatial resource (layer), and data/DCI is received/demodulated based on the estimated channel. In addition, in the case of UL, it may mean that DMRS and data/UCI are transmitted/modulated using the Tx beam and/or power indicated by the corresponding TCI state in the frequency/time/space resource.

Here, the UL TCI state contains Tx beam and/or Tx power information of the UE, and may be configured to the UE through other parameters such as spatial relation info instead of the TCI state. The UL TCI state may be directly indicated by the UL grant DCI or may mean spatial relation information of the SRS resource indicated through the SRI (sounding resource indicator) field of the UL grant DCI. Or UL TCI state may mean an open loop (OL) transmission power control parameter (OL Tx power control parameter) connected to a value indicated through the SRI field of the UL grant DCI (e.g., j: open loop parameters Po and alpha (maximum per cell) index for 32 parameter value sets), q_d: index of DL RS resource for PL (pathloss) measurement (up to 4 measurements per cell), l: closed loop power control process index (up to 2 per cell) processes)).

Hereinafter, MTRP eMBB will be described.

In the present disclosure, MTRP-eMBB means that multiple TRP transmits different data (e.g., different TB) using different layer/time/frequency. It is assumed that the UE configured with the MTRP-eMBB transmission method is indicated by several TCI states by DCI, and data received using the QCL RS of each TCI state are different data.

On the other hand, whether the MTRP URLLC transmission/reception or the MTRP eMBB transmission/reception is performed may be determined by the UE by separately using the RNTI for MTRP-URLLC and the RNTI for MTRP-eMBB. That is, when CRC masking of DCI is performed using RNTI for URLLC, the UE regards URLLC transmission, and when CRC masking of DCI is performed using RNTI for eMBB, the UE regards eMBB transmission. Alternatively, the base station may configure MTRP URLLC transmission/reception to the UE or TRP eMBB transmission/reception through other new signaling.

In the description of the present disclosure, it is described assuming cooperative transmission/reception between 2 TRPs for convenience of description, but the method proposed in the present disclosure may be extended and applied even in three or more multi-TRP environments and may be extended and applied to the multi-panel environment (that is, by matching the TRP to the panel). In addition, different TRPs may be recognized by the UE as different TCI states.

Therefore, the UE receiving/transmitting data/DCI/UCI using TCI state 1 means that it receives/transmits data/DCI/UCI from/to TRP 1.

Method for transmitting and receiving channel state information (CSI)

The contents discussed above can be applied in combination with the methods proposed in the present disclosure, which will be described later, or can be supplemented to clarify the technical characteristics of the methods proposed in the present disclosure. The methods described below are divided for convenience of explanation, and some components of one method may be replaced with some components of another method, or may be applied in combination with each other.

In NR Rel-15/Rel-16, the UE's CSI/beam measurement and/or CSI/beam reporting procedures are defined for CSI reporting (or beam reporting) operation between a base station and a UE.

Channel state information (CSI) may include information related to beam reporting (e.g., DL RS resource index (CRI, SSBRI), L1-RSRP, L1-SINR). However, in the present disclosure, when CSI reporting and beam reporting are referred to separately, information reported according to a CSI reporting operation may be interpreted to mean information excluding information related to beam reporting from information that can be included in the CSI.

For CSI/L1-RSRP/L1-SINR measurement of DL RS (CSI-RS/SSB), a specific CSI-RS resource set(s) or/and CSI-SSB resource set(s) may be configured for a UE. The CSI-RS resource set(s) or/and CSI-SSB resource set(s) may be configured/connected in a specific CSI resource setting (RRC IE CSI-ResourceConfig). And the CSI resource setting is configured/connected/related to a specific CSI reporting setting (RRC IE CSI-ReportConfig). Based on this, CSI-related quantities, L1-RSRP-related quantities, or L1-SINR-related quantities may be reported by a UE according to reportQuantity of a corresponding CSI reporting setting.

The CSI/beam measurement and reporting operation described above is an operation mainly used in S-TRP transmission and reception, and a CSI/beam reporting operation for M-TRP transmission and reception needs to be supported.

In particular, in the Rel-17 NR FeMIMO standardization, it was agreed to proceed with beam reporting enhancement for simultaneous M-TRP transmission with multi-panel reception. For simultaneous M-TRP transmission with multi-panel reception between a base station and a UE, a UE needs to report to a base station a CMR (DL RS or/and DL beam) combination that can be simultaneously received from different TRPs.

Rel-15 group-based beam reporting exists as a beam reporting method that has this simultaneous reception CMR combination report function. In the case of the Rel-15 group-based beam reporting, if the groupBasedBeamReporting parameter in each CSI-ReportConfig is 'enabled', two simultaneously receivable CMRs are reported when beam reporting through the corresponding CSI-ReportConfig.

However, from two simultaneously receivable CMRs reported through group-based beam reporting, it cannot be determined whether corresponding CMRs are CMRs from S-TRP or M-TRP. This is because, when measuring corresponding CMRs, a UE reports the CMRs determined based only on whether simultaneous reception is possible without confirming whether the CMRs are CMRs from an S-TRP or CMRs from different M-TRPs.

Through the above-described group-based beam reporting, only the best CMR pair that can be simultaneously received is reported, but there is a problem that beam reporting for M-TRP purposes is not always performed.

The following describes methods for solving the above-mentioned problems.

Table 8 below summarizes the agreements related to M-TRP beam measurement and reporting.

[Table 8]

| Agreement |
| --- |
| For L1-RSRP, consider measurement / reporting enhancement to facilitate inter-TRP beam pairing<br>1) Option-1: Group-based reporting,<br>a) e.g., beam restriction to facilitate inter-TRP pairing.<br>2) Option-2: Non-group-based reporting |
| **Agreement**<br>Evaluate and study at least but not limited to the following issues for multi-beam enhancement<br>1) Issue 1: Consideration of inter-beam interference<br>2) Issue 2: For group-based reporting, increased number of groups and/or beams per group<br>3) Issue 3: UE Rx panel related beam measurement/report<br>a) NOTE: "UE panel" is used for discussion purpose only |

(continued)

| **Agreement** |
| --- |
| Down-select at least one of the following options for beam measurement/reporting enhancement to facilitate inter-TRP beam pairing in RAN1 #104-e |
| 1) Option 1: In a CSI-report, UE can report N> 1 pair/groups and M>=1 beams per pair/group |
| a) Different beams in different pairs/groups can be received simultaneously |
| b) FFS: whether M is equal or can be different across different pair/group |
| 2) Option 2: In a CSI-report. UE can report N(N>=1) pairs/groups and M (M>1) beams per pair/group |
| a) Different beams within a pair/group can be received simultaneously |
| 3) Option 3: UE report M(M>=1) beams in N (N>1) CSI-reports corresponding to N report setting |
| a) Different beams in different CSI-reports can be received simultaneously |
| b) FFS: whether/how to introduce an association between different CSI-reports |
| c) FFS: whether/how to differentiate reported measurements for beams that are received simultaneously vs. beams that are not received simultaneously |
| i) Whether/how to introduce an indication along with the CSI-reports to indicate whether the beams in different CSI-reports can be received simultaneously |
| 4) FFS: value of N and M in each option |
| 5) FFS: Association between different beams in above options and different TRP/UE panels |
| 6) FFS: Identify new use cases per option compared with R16 (including backhaul) |
| 7) FFS: whether different beams in different pairs/groups/reports can be received by same spatial filter per option |

| **Agreement** |
| --- |
| For beam measurement in support of M-TRP simultaneous transmission |
| 1) Support a single CSI-report consisting of N beams pairs/groups and M (M>1) beams per pair/group, and different beams within a pair/group can be received simultaneously |
| a) Support M = 2 |
| b) Support extending the maximum value of N > 1, exact value FFS |
| c) N=1 and N=2 |
| i) FFS: Other values larger than 2 |
| ii) FFS: Whether the UE could report beams are received with different RX beams |
| 2) Further study the support of option 1 and option 3 |
| 3) The above applies at least for L1-RSRP |
| 4) FFS: L1-SINR |

| **Agreement** |
| --- |
| For beam reporting option 2 |
| 1) On the maximum number of beam pairs/groups (N) that can be reported in a single CSI-report, discuss and down-select from the following two alternatives in RAN1#105-e: |
| a) Alt1: Support maximum value N = {1, 2} |
| b) Alt2: Support maximum value N = {1, 2, 3, 4} |
| 2) FFS: Introduce a UE capability Neap on the maximum value of N in Rel.17 |
| 3) On the number of beam pairs/groups (N) reported in a single CSI-report, discuss and down select between the following two alternatives in RAN1#105-e |
| a) Alt1: The value of N is fixed by RRC configuration |
| b) Alt2: The value of N is upper bounded by a maximum value Nmax configured by RRC, and dynamically selected/indicated by UE |

| **Agreement** |
| --- |
| For CMR configuration for option 2, adopt |
| 1) Alt-1: "set" |

| **Agreement** |
| --- |
| The bitwidth of each SSBRI/CRI is determined based on the number of SSB/CSI-RS resources in the associated CMR resource set |
| 1) FFS: specify the association between SSBRIs/CRIs in a reported group and CMR resource sets |

(continued)

| Agreement |
|---|
| 1) For beam measurement/reporting option 2, the maximum number of beam groups in a single CSI-report is a UE capability and may take value from Nmax = {1,2,3,4} in Rel.17.<br>a) FFS: If UCI payload reduction for Nmax>=2 is needed and if so, how<br>2) The number of beam groups (N) reported in a single CSI-report<br>b) Alt1: The value of N is configured by RRC signalling |

In the Rel-17 NR FeMIMO standardization, Option 1 to Option 3 were discussed as a beam reporting enhancement method for simultaneous M-TRP transmission with multi-panel reception as described above.

Option 1 and Option 2 are enhancement methods based on group-based beam reporting, and Option 3 is an enhancement method based on non-group-based beam reporting.

According to Option 1, the following operation/configuration is performed.

CMRs from different reporting groups reported by a UE are composed of CMRs that can be simultaneously received. If beam reporting for M-TRPs is performed, a specific group may mean a specific TRP (different groups mean different TRPs). That is, during beam reporting for M-TRPs, each group can be interpreted as corresponding to each TRP.

According to Option 2, the following operation/configuration is performed.

CMRs within a specific reporting group reported by a UE are composed of CMRs that can be simultaneously received. If beam reporting for M-TRPs is performed, a group may include CMR pairs from different TRPs. If N groups are reported, this may mean that N best pairs (i.e., best beam pairs) are reported.

According to Option 3, the following operation/configuration is performed.

This method is performed targeting a specific scenario (mainly, non-ideal backhaul scenario). According to this method, different reporting settings can be connected/related. CMRs reported from different report settings (CSI-ReportConfig IE) may be CMRs that can be received simultaneously or CMRs that cannot be received simultaneously (different CSI-ReportConfigs mean different TRPs). In other words, CSI-ReportConfig, a parameter indicating a reporting setting, can be interpreted as corresponding to a TRP. Accordingly, each of a plurality of reporting settings (CSI-ReportConfig) may correspond to each TRP among a plurality of TRPs .

In the Rel-17 NR FeMIMO standardization, it was agreed that Option 2 among the above-mentioned options would be supported.

In addition, in CSI resource configuration for beam measurement of the UE, for TRP differentiation of channel measurement resource (CMR) resources, the number of CMR resource sets that may be linked/associated with a CMR resource configuration has been expanded from 1 to 2.

That is, when two CMR resource sets are configured/linked/associated in a CMR resource configuration, the UE may identify/recognize CMR resources from different CMR resource sets in the CMR resource configuration as CMR resources from different TRPs. Based on the identified/recognized CMR resources from different TRPs, the UE may perform beam measurement and subsequent beam reporting operations (by Option 2 described above). As an example, in other words, different CMR resource sets within a specific CMR resource setting may correspond to different TRPs.

Additionally, in the subsequent beam reporting operation of the UE, the UE may report N beam pairs/groups. Here, each beam pair/group may be configured by different CMR resources from the different CMR resource sets described above.

The discussion of beam measurement and reporting in Rel-17 and enhancement of M-TRP DL transmission in Rel-16/17 were mainly conducted considering non-coherent joint transmission (NC-JT).

In the case of standardization for NR enhancement MIMO after Rel-18, M-TRP enhancement considering coherent joint transmission (C-JT) may be performed. Here, in the case of C-JT, coherent transmission and reception needs to be performed so that constructive interference occurs when signals from both TRPs overlap during M-TRP DL transmission. Therefore, when performing beam measurement and reporting and/or CSI measurement reporting between the base station and the UE, additional procedures and/or reporting may be required.

Based on the above background, the present disclosure proposes a beam measurement and reporting method between a base station and a UE based on M-TRP considering C-JT, and operations (embodiments) related thereto.

In the present disclosure, '/' may be interpreted as 'and', 'or', or 'and/or' depending on the context.

Embodiment 1

This embossdiment relates to a method for configuring a channel measurement resource (CMR) resource sfor beam measurement and reporting considering C-JT. For example, the base station may perform CMR resource configuration for the UE using at least one of the examples described below.

(Embodiment 1-1)

For └─ └─ example, the base station may configure each CMR (e.g., CSI-RS configured as a CMR resource) from each TRP used for C-JT transmission. As a specific example, a first CSI-RS (e.g., 1 port CSI-RS #1) for beam measurement of the first TRP (TRP #1) and a second CSI-RS for beam measurement of the second TRP (TRP #1) RS (e.g. 1 port CSI-RS #2) may be configured to the UEs.

Subsequently, the UE may measure the H1 channel from the first CSI-RS to calculate RSRP and/or SINR (e.g., L1-RSRP and/or L1-SINR) for the beam of the first TRP. Additionally, the UE may measure the H2 channel from the second CSI-RS to calculate RSRP and/or SINR for the beam of the second TRP. That is, the UE may perform CSI-RS-based channel measurement for each configured CMR resource.

Here, the CMR corresponding to the above-described TRP may be configured to multiple numbers per TRP. In this case, multiple CMR pairs may be configured for beam measurement usage.

The above-described CMRs may each be configured to 1 port or 2 ports (e.g., 2 ports considering X-pol).

(Embodiment 1-2)

As another example, the base station may configure a single CMR in which composed channels from each TRP used for C-JT transmission are transmitted and received. As a specific example, a CSI-RS (e.g. CSI-RS #1), in which the first beam (beam #1) from the first TRP (TRP #1) and the second beam (beam #2) from the second TRP (TRP #2) overlap may be configured to UE by the base station.

Subsequently, for RSRP and/or SINR calculation, the UE may measure a composed channel (H1+H2) from the CSI-RS configured for RSRP and/or SINR calculation. Here, the composed channel (H1+H2) may mean a single frequency network (SFN)ed channel of the first TRP and the second TRP.

As described above, SFNed CMR (i.e., single CMR for measurement of composed channels) may be configured to multiple, and the UE may perform measurement based on multiple CMR candidates.

The single CMR described above may be set to 1 port or 2 ports (e.g., 2 ports considering X-pol), respectively.

(Embodiment 1-3)

As another example, the base station may configure a single CMR (e.g., a CMR with 2 ports) consisting of port(s) from each TRP utilized for C-JT transmission. As a specific example, a 2-port CSI-RS (e.g., 2 ports CSI-RS) including 1 port for beam measurement of the first TRP (TRP #1) and 1 port for beam measurement of the second TRP (TRP #2) #1) may be configured to the UE.

Subsequently, for RSRP and/or SINR calculation, the UE may measure the H1 channel for the first TRP from the first port of the configured 2-port CSI-RS, and measure the H2 channel for the second TRP from the second port.

A single CMR composed of beams and/or channels from different TRPs described above may be configured to multiple, and the UE may perform measurement based on multiple candidates.

Also, for example, in relation to Embodiment 1-2 and 1-3, the single CMR described above may mean a CMR included in one CMR resource set configured to the UE by the base station. In this case, one CMR resource set may be for multiple TRPs. Or, for example, the single CMR described above may mean a CMR that is identically configured to multiple (e.g., two) CMR resource sets configured to the UE by the base station. In this case, each CMR resource set may be configured for each TRP, and the UE may perform measurement on the composed channel using the same CMR configured for multiple TRPs. In addition, when a single CMR configuration as described above is configured/indicated to the UE, the UE may recognize that the configuration for the corresponding CMR resource set(s) is for channel measurement for C-JT usage.

Embodiment 2

This embodiment relates to a method for configuring an interference measurement resource (IMR) resource for beam measurement and reporting considering C-JT. For example, the base station may perform IMR resource configuration for the UE using at least one of the examples described below. This may be for L1-SINR based beam reporting and/or CSI reporting.

(Embodiment 2-1)

For example, in the case of IMR configuration for C-JT, the UE may receive the SFNed channel from TRPs for joint transmission. Therefore, the IMR may be configured to measure signals from out of cooperative transmission TRPs.

As a specific example, the base station may configure a zero power (ZP) IMR for the UE, and the UE may be configured to measure interference from TRPs other than the TRP pair used for C-JT using the corresponding ZP IMR.

(Embodiment 2-2)

For another example, in the case of IMR configuration for NC-JT, the UE may need to receive an individual channel rather than an SFNed channel from TRPs for joint transmission. Therefore, the IMR may be configured by considering interference measurement between cooperative transmission TRPs for inter-layerss interference measurement.

As a specific example, when the first CMR (CMR #1) for the first TRP (TRP #1) and the first CMR (CMR #2) for the second TRP (TRP #2) are configured, the IMR for the first TRP may be set to the second CMR, and the IMR for the second TRP may be set to the first CMR.

Through the above-described IMR settings, the UE may measure cross interference (or cross-layer interference) between cooperative transmission TRPs, when transmitting NC-JT, the CMR pair with the least cross interference may be selected and reported to the base station.

(Embodiment 2-3)

As another example, considering both C-JT and NC-JT, the base station may configure multiple CMRs for CMR configuration and/or IMR configuration. As a specific example, if three CMRs are configured, the first CMR (CMR #1) and the second CMR (CMR #2) may be used as a CMR pair for C-JT, and the third CMR (CMR #3) may be used as a separate CMR for NC-JT.

In this case, since the first CMR and the second CMR are for C-JT measurement, a separate IMR may be configured according to the method in Embodiment 2-1 described above, and cross interference may not need to be considered between the first CMR and the second CMR. On the other hand, the first CMR/the second CMR and the thrid CMR may be used for NC-JT usage. The method in Embodiment 2-2 described above may be applied for cross interference measurement between the first CMR/the second CMR and the third CMR.

Embodiment 3

This embodiment relates to measurement criteria and/or RSRP/SINR calculation method for beam measurement and reporting considering C-JT.

For example, based on the above-described CMR configuration (e.g., Embodiment 1) and/or IMR configuration (e.g., Embodiment 2), the UE may perform a measurement and/or a RSRP/SINR calculation by using at least one of the examples described below. sHere, the calculated RSRP/SINR may be for L1-RSRP/L1-SINR reporting.

(Embodiment 3-1)

For example, the UE may independently calculate RSRP/SINR for the H1 channel measured through the first CMR (CMR #1) from the first TRP (TRP #1) and the H2 channel measured through the second CMR (CMR #2) from the second TRP (TRP #2), and the UE may perform RSRP/SINR calculation by summing the calculated RSRPs/SINRs. In other words, the UE may calculate a power of a desired signal for for RSRP/SINR calculation in the form |H1|+|H2|.

(Embodiment 3-2)

For example, the UE may calculate RSRP/SINR for a combined/composed channel of the H1 channel measured through the first CMR (CMR #1) from the first TRP (TRP #1) and the H2 channel measured through the second CMR (CMR #2) from the second TRP (TRP #2). In other words, the UE may calculate a power of a desired signal for for RSRP/SINR calculation in the form |H1+H2|.

(Embodiment 3-3)

As another example, for the H1 channel measured through the first CMR (CMR #1) from the first TRP (TRP #1) and the H2 channel measured through the second CMR (CMR #2) from the second TRP (TRP #2), the UE may calculate RSRP/SINR based on the combined/composed channel result value that adds co-phase information (e.g., co-phase term, co-phase value) for coherent transmission and reception to the H1 channel and/or H2 channel. In other words, the UE may calculate a power of a desired signal for for RSRP/SINR calculation in the form |H1+(co-phase)*H2| and/or |(co-phase)*H1+H2|.

In the above-described operation, the base station may perform configuration/indication in advance to the UE as to which TRP to apply co-phase information for RSRP/SINR calculation. As an example, the base station may pre-configure/indicate the UE whether to apply co-phase information to the first TRP (or first CMR) and/or the second TRP (or second CMR) .

For example, the base station may configure/indicate information on the CMR (i.e., CSI resource) to which the corresponding co-phase information will be applied through configuration information related to CSI reporting (e.g., CSI reportConfig). And/or, the base station may configure/indicate information on CMR (i.e., CSI resource) to apply the co-phase information through CSI resource configuration information (e.g., CSI resource Configuration) for the CMR resource set (i.e., CSI resource set) associated with the CSI report. As a specific example, within the CSI resource configuration information, regarding the application of co-phase information, the base station may configure at least one of Information indicating application based on the first CMR resource set (e.g., CMR resource set #1), Information indicating application based on a second CMR resource set (e.g., CMR resource set #2), or information indicating that application is based on specific CMR resource(s) within a specific CMR resource set. Alternatively, in an implicit way, co-phase information may be preconfigured/defined/prescribed to be applied based on a specific CMR resource set (e.g., the first set CMR resource set, the CMR resource set with the lowest ID).

(Embodiment 3-4)

As another example, the UE may calculate RSRP/SINR by measuring (H1+H2) from the SFNed port. As an example, when the base station configures SFNed single CMR to the terminal as in Embodiment 1-2 described above, the UE may specify a composed channel based on the SFNed port and calculate RSRP/SINR accordingly.

In this embodiment, the base station may configure/indicate/activate information to the UE on which method to perform RSRP/SINR calculation based on any of the above-described examples (e.g., Embodiment 3-1 to 3-4).

Embodiment 4

This embodiment relates to a reporting-related configuration of a base station and/or a beam/CSI reporting method of a UE for beam measurement and reporting considering C-JT.

For example, for beam measurement and reporting considering C-JT, the base station may configure the reporting quantity (e.g., reportQuantity) considering co-phase information in a specific reporting configuration (e.g., CSI-reportConfig) and configure/indicate/activate the UE to perform beam/CSI reporting (taking C-JT into account). Here, the reporting quantity (e.g. reportQuantity) to which co-phase information is considered may include at least one of CSI-RS resource indicator (CRI), L1-RSRP value, co-phase information, or target TRP/CMR information to which co-phase information is applied. And/or, the reporting quantity (e.g. reportQuantity) to which co-phase information is considered may include at least one of CRI, L1-SINR value, co-phase information, or target TRP/CMR information to which co-phase information is applied.

The UE may perform beam/CSI measurement based on the above-described reporting configuration and measurement-related configuration according to the above-described examples (e.g., Embodiment 1 to 3), calculate L1-RSRP/L1-SINR according to the measurement and perform beam/CSI reporting to the base station.

Based on reporting configuration such as the examples described above, the base station and the UE may perform beam/CSI reporting operations by making an agreement/agreement as in at least one of the examples described bselow.

(Embodiment 4-1)

For example, with respect to CMR configuration, the base station may configure/indicate/activate to UE about which the candidate pair(s) (that may be used for C-JT) according to each set (or subset) for the CMR resource sets (or subsets) representing the CMR from each TRP. In this case, the UE may perform beam/CSI measurements on the corresponding candidate pair(s), and then the UE may report information about the best N pairs to the base station, and report co-phase information (for C-JT transmission and reception) for each pair to the base station.

As a specific example, for beam/CSI measurement of the UE, the base station may configure a first CMR resource set (CMR resource set #1) and a second CMR resource set (CMR resource set #2) to the terminal. In this case, candidate pair(s) such as (the first CMR of the first CMR resource set, the first CMR of the second CMR resource set), (the second CMR of the first CMR resource set, the second CMR of the second CMR resource set), and (the third CMR of the first CMR resource set, the third CMR of the second CMR resource set) may be promised/provisioned. The UE may perform beam/CSI measurement for the corresponding candidate pair(s) and then report this information to the base station.

In the above-described UE report, when reporting co-phase information for each pair, information on the target TRP/CMR to which the corresponding co-phase information is to be applied may be additionally included in the report. And/or, when setting up reporting, the base station may pre-configure/indicate the UE about which CMR and/or CMR resource set the UE shall consider/calculate and report co-phase information for.

(Embodiment 4-2)

For another example, with regard to CMR configuration, the base station may configure/indicate/activate a CMR resource set (or subset) (s) representing the CMR from each TRP. In this case, for each (two) configured CMR resource sets (or subsets), after performing beam/CSI measurements for all M-TRP DL beam combinations/pairs, the UE may report information on the optimal N pairs to the base station, and may report co-phase information (for C-JT transmission and reception) for each pair to the base station.

Here, with respect to all M-TRP DL beam combinations/pairs, one combination/pair may consist of the CMR of one CMR resource set (or subset) and the CMR of another CMR resource set (or subset).

In the above-described UE report, when reporting co-phase information for each pair, information on the target TRP/CMR to which the corresponding co-phase information is to be applied may be additionally included in the report. And/or, when setting up reporting, the base station may pre-configure/indicate the UE on which CMR and/or CMR resource set the UE shall consider/calculate and report co-phase information.

(Embodiment 4-3)

As another example, regarding CMR configuration, the base station may configure/indicate/activate a CMR resource set (or subset)(s) representing the CMR from each TRP. In this case, for each (two) configured CMR resource sets (or subsets), the UE may report a specific CMR of a specific CMR resource set (or subset) and the CMR(s) of a different CMR resource set (or subset) to the base station as information on beam combination/pair for M-TRP DL transmission, and the UE may report co-phase information (for C-JT transmission and reception) for each pair to the base station.

As a specific example, when reporting beam/CSI to the base station, the UE may report the first CMR (CMR #1) of the first CMR resource set (CMR resource set #1), the second CMR (CMR #2) of the second CMR resource set (CMR resource set #2) and the third CMR (CMR #3), and the UE may report co-phase information when the first CMR and the second CMR form a pair and co-phase information when the first CMR and the third CMR form a pair, respectively.

As another specific example, when the UE reports on four CMRs, the best CMR becomes the criterion, and the UE may calculate co-phase information for the remaining 2nd optimal CMR, 3rd optimal CMR, and 4th optimal CMR based on the optimal CMR and report it to the base station. Also, at this time, in the case of optimal CMR, RSRP/SINR values may be reported based on S-TRP. For the remaining CMRs, RSRP/SINR values may be reported based on when C-JT transmission and reception is performed using the optimal CMR and the co-phase information reported by the corresponding CMR pair.

In the above-described UE report, When reporting co-phase information for each pair, information on the target TRP/CMR to which the corresponding co-phase information is applied may be additionally included in the report. And/or, when setting up reporting, the base station may pre-configure/indicate the UE about which CMR and/or CMR resource set the UE shall consider/calculate and report co-phase information for.

Embodiment 5

This embodiment relates to a co-phase related base station configuration and/or UE reporting method for beam measurement and reporting considering C-JT.

(Embodiment 5-1)

For example, in the above-described embodiments (e.g., Embodiments 1 to 4), the base station may pre-configure the granularity (e.g., M-Phase Shift Keying (M-PSK)) for co-phase information that the UE needs to measure/calculate/report. That is, when the UE is configured/indicated to report co-phase information on an M-PSK basis, the base station may configure/indicate the UE in advance with the corresponding M value (e.g., M={2, 4, 8, 16, ...}). Following this, the UE may measure/calculate/report co-phase information based on M-PSK.s

As a specific example, when the base station configures/indicates the UE to set M=2, the UE may report phase 0 or 180 to the base stations. Alternatively, when the base station configured/indicates the UE to set M=4, the UE may report phase 0, 90, 180, or 270 to the base station. Here, the base station's configuration/indication for the M value may be performed at the CMR resource set(s)/subset(s) level, report configuration (e.g. CSI reportConfig) level, and UE level.s

(Embodiment 5-2)

For another example, in the above-described embodiments (e.g., Embodiments 1 to 4), the base station may configure a resource unit in the frequency domain in which the terminal shall measure/calculate/report co-phase information according to a specific granularity (e.g., similar to the wideband/subband method when measuring/reporting CSI). Subsequently, for a specific CMR pair, the UE may report co-phase information to the base station for each resource unit in the corresponding frequency domain.

Additionally, regarding the granularity of resource units (e.g., wideband, subband) in the frequency domain described above, the base station may configure the granularity of co-phase information differently.

As a specific example, the UE may be configured to measure/calculate/report co-phase information based on QPSK (Quadrature Phase Shift Keying) for wideband(or subband), and the UE may be configured to measure/calculate/report co-phase information based on Binary Phase Shift Keying (BPSK) for subband(or wideband). Alternatively, the UE may be configured to measure/calculate/report co-phase information based on QPSK for wideband, and for a subband, the UE may be configured to measure/calculate/report relative co-phase information based on the co-phase information of the wideband to which the subband belongs.

In addition, in the above-described embodiments (e.g., Embodiments 1 to 4) and co-phase related embodiments (e.g., Example 5), the base station may be configured to report co-phase information for the wideband when the UE performs beam reporting (i.e., coarse co-phase reporting), and the base station may be configured to report co-phase information for the subband when the terminal performs CSI-related reporting (i.e., fine co-phase reporting). In other words, the base station may configure a 2-step co-phase report to the UE that operates the type of co-phase information differently depending on the type of UE report.

And/or, in the reporting configuration for the UE (e.g. CSI reportConfig), the base station may configure two reporting configuration for the UE for the coarse co-phase reporting and fine co-phase reporting described above, and the base station may configure the two types of reports to be performed at different intervals, or may configure the UE to report two types of reports simultaneously, but omit certain report types (e.g., coarse co-phase reporting and/or fine co-phase reporting) at certain intervals. This method may also be applied when there are multiple reporting configurations associated with the same CMR resource configuration.

In embodiments described in the present disclosure, a configuration of a base station mean RRC (or higher layer) signaling, the base station's indication may mean a dynamic indication using MAC-CE, DCI, etc., and activation of the base station may mean MAC level signaling including a MAC-CE message.ss

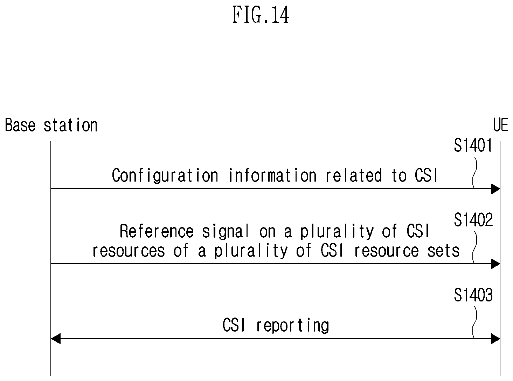

FIG. 14 is a diagram illustrating a signaling procedure between a base station and a UE for a method of transmitting and receiving control information according to an embodiment of the present disclosure.

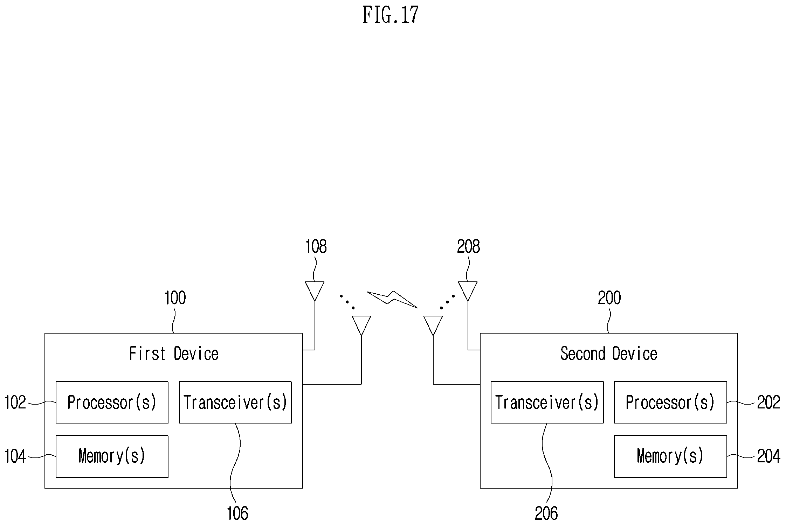

FIG. 14 illustrates a signaling procedure between a UE (user equipment) and a base station (BS) based on the previously proposed methods (e.g., any one of Embodiment 1, Embodiment 2, Embodiment 3, Embodiment 4, Embodiment 5, and detailed embodiments thereof, or a combination of one or more (detailed) embodiments). The example in FIG. 14 is for convenience of explanation and does not limit the scope of the present disclosure. Some step(s) illustrated in FIG. 14 may be omitted depending on the situation and/or setting. Additionally, a base station and a UE in FIG. 14 are just one example and can be implemented with the device illustrated in FIG. 17 below. For example, the processor 102/202 of FIG. 17 can control to transmit and receive channels/signals/data/information, etc. using the transceiver 106/206, and can also control to store transmitted or received channels/signals/data/information, etc. in the memory 104/204.

In addition, in the operation between a base station and a UE in FIG. 14, the above-described description can be referenced/used even if there is no separate mention.

A base station may refer to a general term for objects that transmit and receive data with a UE. For example, a base station may be a concept that includes one or more Transmission Points (TPs), one or more Transmission and Reception Points (TRPs), etc. Additionally, the TP and/or TRP may include a base station panel, a transmission and reception unit, etc. Additionally, "TRP" can be replaced with terms such as panel, antenna array, cell (e.g., macro cell / small cell / pico cell, etc.), TP (transmission point), base station, gNB, etc. As described above, TRPs may be classified according to information (e.g., index, ID) on a CORESET group (or CORESET pool). For example, if one UE is configured to transmit and receive with multiple TRPs (or cells), this may mean that multiple CORESET groups (or CORESET pools) are configured for one UE. Configuration of such a CORESET group (or CORESET pool) can be performed through higher layer signaling (e.g., RRC signaling, etc.).

Referring to FIG. 14, for convenience of explanation, signaling between one base station and a terminal is considered, but of course, the signaling method can be extended and applied to signaling between multiple TRPs and multiple UEs. In the following description, a base station can be interpreted as one TRP. Alternatively, a base station may include multiple TRPs, or may be one cell including multiple TRPs.

Referring to FIG. 14, in step S1410, the UE may receive CSI-related configuration information from the base station.

The CSI-related configuration information may include information for configuring an operation based on the previously proposed method (e.g., any one of Embodiment 1, Embodiment 2, Embodiment 3, Embodiment 4, Embodiment 5, and detailed embodiments thereof, or a combination of one or more (detailed) embodiments).

Here, the CSI-related configuration information may be transmitted separately into CSI reporting-related configuration information (i.e., CSI reporting settings) (e.g., RRC IE 'CSI-ReportConfig') (hereinafter, first configuration information) and CSI resource-related configuration information (i.e., CSI resource settings) (e.g., RRC IE 'CSI-ResourceConfig') (hereinafter, second configuration information).

In addition, as described above, a specific CSI-RS resource set(s) and/or CSI-SSB resource set(s) (i.e., a set of M (M is a natural number) CSI resources) are configured for CSI/L1-RSRP/L1-SINR measurement of DL RS (CSI-RS/SSB) according to the second configuration information. Here, the CSI resource may mean a CSI-RS resource set for channel measurement or interference measurement.

As an example, the second configuration information may include at least one CMR resource configuration, information that a specific CMR resource is a CMR resource from a different TRP from other CMR resources may be additionally included. Additionally, the second configuration information may include at least one IMR resource configuration.

Additionally, the second configuration information may be connected/related to specific first configuration information, and according to the reportQuantity in the first configuration information, a CSI-related report, L1-RSRP-related report, or L1-SINR-related report for the CSI resource set(s) configured by the connected/associated second configuration information may be reported by a UE. Here, the L1-RSRP-related report and the L1-SNIR-related reports can be collectively referred to as a beam report.

Additionally, the first configuration information may include a configuration for group-based (Beam) reporting (e.g., RRC parameter 'groupBasedBeamReporting'), and group-based (Beam) reporting may be configured/enabled by the configuration. Additionally, the number of N (N is a natural number) CSI resource groups subject to group-based (beam) reporting may be configured based on the first configuration information.

Likewise, if group-based (Beam) reporting is configured/enabled, a UE reports information on a plurality of CSI resource that can be received simultaneously in beam reporting (e.g., L1-RSRP, L1-SNIR, etc.) according to the first configuration information.

Additionally, in relation to group-based (beam) reporting, the second configuration information may include information on N (N is a natural number) CSI resource pairs/groups. Here, N CSI resource groups are each configured with M CSI resources, and M CSI resources can be selected one by one from each of the M CSI resource sets. Here, the M CSI resources for each of the N resource pairs/groups can be simultaneously received by the UE (i.e., the reference signal can be received simultaneously on the corresponding CSI resources). That is, M CSI resources belonging to the same resource pair/group (i.e., one selected from each of the M CSI resource sets) can be received simultaneously. In other words, the CSI resource group may mean a combination/pair of the above-described CSI-RS resources (e.g., CMR combination/pair, etc.).

That is, when group-based (beam) reporting is configured, a UE performs beam reporting on the N CSI resource pairs/groups grouped/paired by selecting one from each of the M CSI resource sets (i.e., indexes of CSI resources belonging to the corresponding CSI resource pair/group and beam measurement (e.g., L1-RSRP, L1-SINR, etc.) information of the corresponding CSI resources).

In step S1402, a UE may receive a reference signal (e.g., CSI-RS, SSB, etc.) on a plurality of CSI resources of a plurality (i.e., M) CSI resource set based on configuration information from a base station.

That is, a UE may receive a reference signal (e.g., CSI-RS, SSB, etc.) on a plurality of CSI resources in the M CSI resource set configured by the second configuration information. Here, as described above, a UE may simultaneously receive a reference signal on M CSI resources belonging to the same resource pair/group (i.e., one selected from each of the M CSI resource sets).

In step S1403, a UE may transmit CSI to a base station based on the configuration information.

Here, when the number (i.e., N) of CSI pairs/groups subject to group-based (beam) reporting and group-based (beam) reporting is configured by the first configuration information, a UE performs beam reporting (e.g., L1-RSRP, L1-SNIR) on N CSI resource pairs/groups grouped/paired from the M CSI resource sets associated with the first configuration information. In other words, a UE may perform beam reporting (e.g., L1-RSRP, L1-SNIR) for pairs/groups of CSI resources generated by selecting CSI resources simultaneously received from each of the M CSI resource sets.

Here, a UE may perform periodic CSI reporting or may perform aperiodic CSI reporting. In the case of aperiodic CSI reporting, although not shown, a UE may receive a DCI triggering a CSI report from a base station before CSI reporting.

According to the above-described proposed method, the CSI report transmitted by the UE may include phase-related information for each of the N resource groups. For example, when the UE reports on N CSI resource pairs, it may also report co-phase information on the N CSI resource pairs.

Additionally, according to the above-described proposed method, the CSI report transmitted by the terminal may include at least one of RSRP information or SINR information. In this case, each of the RSRP information and the SINR information may be determined as the sum of RSRP values and SINR values calculated for each of the M CSI resources. Alternatively, each of the RSRP information and the SINR information may be determined as an RSRP value and a SINR value calculated for a composed channel of a channel for each of the M CSI resources. Alternatively, each of the RSRP information and the SINR information may be determined as an RSRP value and a SINR value calculated for a composed channel determined by applying the phase-related information to a specific channel among channels for each of the M CSI resources. Here, information indicating a specific CSI resource to which the phase-related information will be applied among the M CSI resources may be configured through higher layer signaling and may be included in at least one of the above-described first configuration information or second configuration information.

Additionally, according to the above-described proposed method, the phase-related information may be determined based on a Phase Shift Keying (PSK) method. In this case, information indicating the order of the PSK method (e.g., M value in Embodiment 5) may be set by the base station to the UE through higher layer signaling. Here, information indicating the order of the PSK method may be included in at least one of the first configuration information or the second configuration information. That is, information indicating the order of the PSK method may be configured at the CMR resource set level or at the CSI reporting configuration level.

Additionally, according to the above-described proposed method, based on information indicating a frequency resource unit related to the phase-related information being set by higher layer signaling, The phase-related information may be determined for a specific frequency resource unit based on the information. In this case, the specific frequency resource unit may be either a wideband or a subband.

Additionally, according to the above-described proposed method, the phase-related information included in the CSI report according to the group-based report may be based on phase information for a wideband. At this time, based on the CSI-related report being configured, the CSI report for the CSI-related report may include phase information for the subband. That is, as described above, the type of phase information reported by the UE can be configured differently by distinguishing between beam reporting and CSI-related reporting (e.g., 2 step co-phase information reporting method).

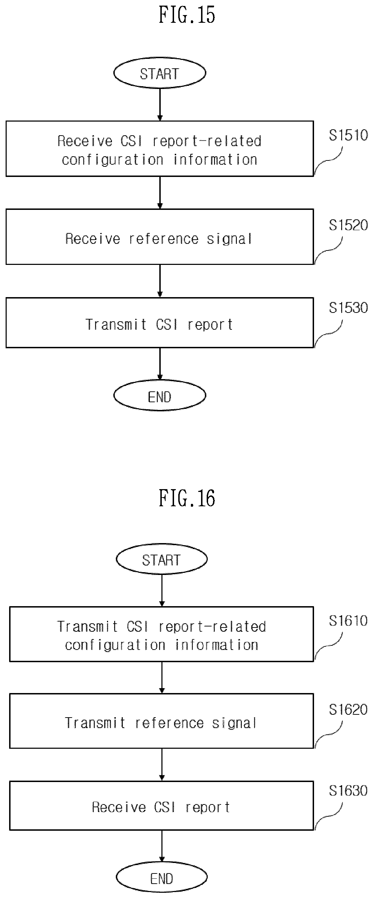

FIG. 15 is a diagram illustrating the operation of a UE for a method for transmitting and receiving channel state information according to an embodiment of the present disclosure.

FIG. 15 illustrates an operation of a UE based on the previously proposed method (e.g., any one of Embodiment 1, Embodiment 2, Embodiment 3, Embodiment 4, Embodiment 5, and detailed embodiments thereof, or a combination of one or more (detailed) embodiments). The example in FIG. 15 is for convenience of explanation and does not limit the scope of the present disclosure. Some step(s) illustrated in FIG. 15 may be omitted depending on the situation and/or setting. Additionally, the UE in FIG. 15 is only an example and may be implemented as a device illustrated in FIG. 17 below. For example, the processors 102/202 of FIG. 17 can control transmission and reception of channels/signals/data/information, etc. (e.g. RRC signaling, MAC CE, DCI for UL/DL scheduling, SRS, PDCCH, PDSCH, PUSCH, PUCCH, PHICH, etc.) using the transceivers 106/206. and also control to store transmitted or received channels/signals/data/information, etc. in the memory 104/204.

Additionally, the operations of FIG. 15 may be processed by one or more processors 102, 202 of FIG. 17, and the operation of FIG. 15 may be stored in memory (e.g., one or more memories 104, 204 of FIG. 17) in the form of instructions/programs (e.g., instructions, executable code) for driving at least one processor (e.g., 102, 202) of FIG. 17.

In step S1510, the UE may receive CSI reporting-related configuration sinformation from the base station.

CSI-related configuration information may include information configuring an operation based on the previously proposed method (e.g., any one of Embodiment 1, Embodiment 2, Embodiment 3, Embodiment 4, Embodiment 5, and detailed embodiments thereof, or one or more combination of (detailed) embodiments).

The corresponding configuration information may correspond to the CSI-related setting information described in FIG. 14, and detailed description of overlapping content will be omitted.

In step S1520, the UE may receive a reference signal related to CSI reporting from the base station based on the above-described configuration information.

Here, the reference signal related to CSI reporting may mean a CSI-reference signal (e.g., CSI-RS, SSB, etc.) transmitted and received through at least one CSI resource set for CSI reporting. As an example, the reference signal may be transmitted and received in a CSI resource configured for channel measurement (e.g., CMR) and/or a CSI resource configured for interference measurement (e.g., IMR).

Reception of the reference signal may correspond to reception of the reference signal described in FIG. 14, and detailed description of overlapping content will be omitted.

In step S1530, the UE may transmit a CSI report to the base station based on the reference signal and configuration information described above.

Here, CSI reporting may mean reporting reporting information on the channel state calculated/measured based on information/parameter(s) for applying the above-described proposed method to the base station.

The CSI report may correspond to the CSI report described in FIG. 14, and detailed description of overlapping content will be omitted.

FIG. 16 is a diagram illustrating the operation of a base station for a method for transmitting and receiving channel state information according to an embodiment of the present disclosure.

FIG. 16 illustrates an operation of a base station based on the previously proposed method (e.g., any one of Embodiment 1, Embodiment 2, Embodiment 3, Embodiment 4, Embodiment 5, and detailed embodiments thereof, or a combination of one or more (detailed) embodiments). The example in FIG. 16 is for convenience of explanation and does not limit the scope of the present disclosure. Some step(s) illustrated in FIG. 16 may be omitted depending on the situation and/or setting. Additionally, the base station in FIG. 16 is only an example and may be implemented as a device illustrated in FIG. 17 below. For example, the processors 102/202 of FIG. 17 can control transmission and reception of channels/signals/data/information, etc. (e.g. RRC signaling, MAC CE, DCI for UL/DL scheduling, SRS, PDCCH, PDSCH, PUSCH, PUCCH, PHICH, etc.) using the transceivers 106/206. and also control to store transmitted or received channels/signals/data/information, etc. in the memory 104/204.

Additionally, the operations of FIG. 16 may be processed by one or more processors 102, 202 of FIG. 17, and the operation of FIG. 16 may be stored in memory (e.g., one or more memories 104, 204 of FIG. 17) in the form of instructions/programs (e.g., instructions, executable code) for driving at least one processor (e.g., 102, 202) of FIG. 17.

In step S1610, the base station may transmit CSI reporting-related configuration information to the UE.

CSI-related configuration information may include information configuring an operation based on the previously proposed method (e.g., any one of Embodiment 1, Embodiment 2, Embodiment 3, Embodiment 4, Embodiment 5, and detailed embodiments thereof, or one or more combination of (detailed) embodiments).

The corresponding configuration information may correspond to the CSI-related setting information described in FIG. 14, and detailed description of overlapping content will be omitted.s

In step S1620, the base station may transmit a reference signal related to CSI reporting to the UE based on the above-described configuration information.

Here, the reference signal related to CSI reporting may mean a CSI-reference signal (e.g., CSI-RS, SSB, etc.) transmitted and received through at least one CSI resource set for CSI reporting. As an example, the reference signal may be transmitted and received in a CSI resource configured for channel measurement (e.g., CMR) and/or a CSI resource configured for interference measurement (e.g., IMR).

Reception of the reference signal may correspond to reception of the reference signal described in FIG. 14, and detailed description of overlapping content will be omitted.

In step S1630, the base station may receive a CSI report based on the reference signal and configuration information described above from the UE.ss

Here, CSI reporting may mean reporting reporting information on the channel state calculated/measured based on information/parameter(s) for applying the above-described proposed method to the base station.

The CSI report may correspond to the CSI report described in FIG. 14, and detailed description of overlapping content will be omitted.

sGeneral Device to which the Present Disclosure may be applied

FIG. 17 illustrates a block diagram of a wireless communication device according to an embodiment of the present disclosure.

In reference to FIG. 17, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/ signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of transmitting channel state information (CSI) in a wireless communication system, the method performed by a user equipment (UE) comprising:

   receiving, from a base station, first configuration information related to a CSI report and second configuration information related to a CSI resource, wherein based on group-based report being configured by the first configuration information, the second configuration information includes information on M (M is a natural number) CSI resource sets associated with the first configuration information;
   receiving, from the base station, a CSI-reference signal (CSI-RS) on a plurality of CSI resources of the M CSI resource sets based on the second configuration information; and
   transmitting, to the base station, the CSI report based on the CSI-RS and the first configuration information, wherein based on a report for N (N is a natural number) CSI resource groups being configured by the first configuration information, each of the N CSI resource groups is configured with M CSI resources including one CSI resource from each of the M CSI resource sets,
   wherein the M CSI resources for each of the N resource groups are simultaneously received by the UE, and
   wherein the CSI report includes phase-related information for each of the N resource groups.

2. The method of claim 1,

   wherein the CSI report includes at least one of reference signal received power (RSRP) information or signal-to-interference and noise ratio (SINR) information, and
   wherein each of the RSRP information and the SINR information is determined as a sum of RSRP values and a sum of SINR values calculated for each of the M CSI resources.

3. The method of claim 1,

   wherein the CSI report includes at least one of RSRP information or SINR information, and
   wherein each of the RSRP information and the SINR information is determined by a RSRP value and a SINR value calculated for a composed channel of channels for each of the M CSI resources.

4. The method of claim 1,

   wherein the CSI report includes at least one of RSRP information or SINR information, and
   wherein each of the RSRP information and the SINR information is determined by a RSRP value and a SINR value calculated for a composed channel which is determined by applying the phase-related information to a specific channel among channels for each of the M CSI resources.

5. The method of claim 4,
   wherein information indicating a specific CSI resource to which the phase-related information is to be applied among the M CSI resources is configured through a higher layer signaling.

6. The method of claim 5,
   wherein the information indicating the specific CSI resource is included in at least one of the first configuration information or the second configuration information.

7. The method of claim 1,

   wherein the phase-related information is determined based on a phase shift keying (PSK) method, and
   wherein information indicating an order of the PSK method is configured through a higher layer signaling.

8. The method of claim 7,
   wherein information indicating an order of the PSK method is included in at least one of the first configuration information or the second configuration information.s

9. The method of claim 1,

   wherein, based on information indicating a frequency resource unit related to the phase-related information being configured by a higher layer signaling, the phase-related information is determined for a specific frequency resource unit based on the information, and

wherein the specific frequency resource unit is either a wideband or a subband.

10. The method of claim 1,

wherein the phase-related information included in the CSI report according to the group-based report is based on phase information for a wideband, and

wherein, based on a CSI-related report being configured, a CSI report for the CSI-related report includes phase information for a subband.

11. A user equipment (UE) of transmitting channel state information (CSI) in a wireless communication system, the UE comprising:

at least one transceiver for transmitting and receiving a wireless signal; and
at least one processor for controlling the at least one transceiver,
wherein the at least one processor configured to:

receive, from a base station, first configuration information related to a CSI report and second configuration information related to a CSI resource, wherein based on group-based report being configured by the first configuration information, the second configuration information includes information on M (M is a natural number) CSI resource sets associated with the first configuration information;

receive, from the base station, a CSI-reference signal (CSI-RS) on a plurality of CSI resources of the M CSI resource sets based on the second configuration information; and

transmit, to the base station, the CSI report based on the CSI-RS and the first configuration information,

wherein based on a report for N (N is a natural number) CSI resource groups being configured by the first configuration information, each of the N CSI resource groups is configured with M CSI resources including one CSI resource from each of the M CSI resource sets,

wherein the M CSI resources for each of the N resource groups are simultaneously received by the UE, and

wherein the CSI report includes phase-related information for each of the N resource groups.

12. A method of receiving channel state information (CSI) in a wireless communication system, the method performed by a base station comprising:

transmitting, to a user equipment (UE), first configuration information related to a CSI report and second configuration information related to a CSI resource, wherein based on group-based report being configured by the first configuration information, the second configuration information includes information on M (M is a natural number) CSI resource sets associated with the first configuration information;

transmitting, to the UE, a CSI-reference signal (CSI-RS) on a plurality of CSI resources of the M CSI resource sets based on the second configuration information; and

receiving, from the UEs, the CSI report based on the CSI-RS and the first configuration information,

wherein based on a report for N (N is a natural number) CSI resource groups being configured by the first configuration information, each of the N CSI resource groups is configured with M CSI resources including one CSI resource from each of the M CSI resource sets,

wherein the M CSI resources for each of the N resource groups are simultaneously received by the UE, and

wherein the CSI report includes phase-related information for each of the N resource groups.

13. A base station of receiving channel state information (CSI) in a wireless communication system, the base station comprising:

at least one transceiver for transmitting and receiving a wireless signal; and
at least one processor for controlling the at least one transceiver,
wherein the at least one processor configured to:

transmit, to a user equipment (UE), first configuration information related to a CSI report and second configuration information related to a CSI resource, wherein based on group-based report being configured by the first configuration information, the second configuration information includes information on M (M is a natural number) CSI resource sets associated with the first configuration information;

transmit, to the UE, a CSI-reference signal (CSI-RS) on a plurality of CSI resources of the M CSI resource sets based on the second configuration information; and

receive, from the UEs, the CSI report based on the CSI-RS and the first configuration information,

wherein based on a report for N (N is a natural number) CSI resource groups being configured by the first configuration information, each of the N CSI resource groups is configured with M CSI resources including one CSI resource from each of the M CSI resource sets,

wherein the M CSI resources for each of the N resource groups are simultaneously received by the UE, and

wherein the CSI report includes phase-related information for each of the N resource groups.

14. A processing apparatus configured to control a user equipment (UE) of transmitting channel state information (CSI) in a wireless communication system, the processing apparatus comprising:

at least one processor; and

at least one computer memory operably connected to the at least one processor and storing instructions that, based on being executed by the at least one processor, perform operations comprising:

receiving, from a base station, first configuration information related to a CSI report and second configuration information related to a CSI resource, wherein based on group-based report being configured by the first configuration information, the second configuration information includes information on M (M is a natural number) CSI resource sets associated with the first configuration information;

receiving, from the base station, a CSI-reference signal (CSI-RS) on a plurality of CSI resources of the M CSI resource sets based on the second configuration information; and

transmitting, to the base station, the CSI report based on the CSI-RS and the first configuration information,

wherein based on a report for N (N is a natural number) CSI resource groups being configured by the first configuration information, each of the N CSI resource groups is configured with M CSI resources including one CSI resource from each of the M CSI resource sets,

wherein the M CSI resources for each of the N resource groups are simultaneously received by the UE, and

wherein the CSI report includes phase-related information for each of the N resource groups.

15. At least one non-transitory computer-readable medium storing at least one instruction, wherein the at least one instruction executable by at least one processor controls a user equipment (UE) of transmitting channel state information (CSI) to:

receive, from a base station, first configuration information related to a CSI report and second configuration information related to a CSI resource, wherein based on group-based report being configured by the first configuration information, the second configuration information includes information on M (M is a natural number) CSI resource sets associated with the first configuration information;

receive, from the base station, a CSI-reference signal (CSI-RS) on a plurality of CSI resources of the M CSI resource sets based on the second configuration information; and

transmit, to the base station, the CSI report based on the CSI-RS and the first configuration information,

wherein based on a report for N (N is a natural number) CSI resource groups being configured by the first configuration information, each of the N CSI resource groups is configured with M CSI resources including one CSI resource from each of the M CSI resource sets,

wherein the M CSI resources for each of the N resource groups are simultaneously received by the UEs, and

wherein the CSI report includes phase-related information for each of the N resource groups.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k,\bar{l})$
- In a resource block, $(k,l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

## FIG.4

FIG.5

Resource grid

A carrier
(up to 3300 subcarriers,i,e.,275 RBs)

A BWP

1 RB=12 subcarrier

1 RE

1 subcarrier

1 Symbol

l=0  · · · · ·

k=0

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

## FIG.7

## FIG.8

FIG.9

(a)                                    (b)

FIG.10

FIG.11

Terminal                                         Base station

                                                              S710
            NZP CSI-RS resource set IE

       Receive CSI resource(s) configured with
    repetition 'OFF' through different Tx beam

                                                              S720

                                                              S470
S730 ── Determine best beam

            CSI report (CRI/L1-RSRP)

FIG.12

FIG.13

EP 4 373 009 A2

TRP 1

TRP 2

Layer group #1
for CW #1

Layer group #2
for CW #1

UE1

(a)

TRP 1

TRP 2

Layer group #1
for CW #1

Layer group #2
for CW #2

UE1

(b)

FIG.14

Base station                                                                                          UE
                                                                                            S1401
            Configuration information related to CSI
                                                                                            S1402
            Reference signal on a plurality of CSI
            resources of a plurality of CSI resource sets
                                                                                            S1403
                            CSI reporting

## FIG.15

```
           START
             │
             ▼
┌──────────────────────────────┐
│  Receive CSI report-related  │  S1510
│   configuration information  │
└──────────────────────────────┘
             │
             ▼
┌──────────────────────────────┐
│    Receive reference signal  │  S1520
└──────────────────────────────┘
             │
             ▼
┌──────────────────────────────┐
│     Transmit CSI report      │  S1530
└──────────────────────────────┘
             │
             ▼
           END
```

## FIG.16

```
           START
             │
             ▼
┌──────────────────────────────┐
│  Transmit CSI report-related │  S1610
│   configuration information  │
└──────────────────────────────┘
             │
             ▼
┌──────────────────────────────┐
│    Transmit reference signal │  S1620
└──────────────────────────────┘
             │
             ▼
┌──────────────────────────────┐
│      Receive CSI report      │  S1630
└──────────────────────────────┘
             │
             ▼
           END
```

EP 4 373 009 A2

FIG.17

First Device 100

Processor(s) 102
Transceiver(s)
Memory(s) 104
106
108

208
Second Device 200

Transceiver(s) Processor(s) 202
Memory(s) 204
206